# EUROPÄISCHE PATENTSCHRIFT

(11) **EP 0 816 956 B1**
(45) Veröffentlichungstag und Bekanntmachung des Hinweises auf die Patenterteilung: **19.12.2001**
(21) Anmeldenummer: 97109788.6
(22) Anmeldetag: 16.06.1997
(51) Int. Cl.: G05B 19/042, G05B 19/408

(54) **Verfahren zum Abspeichern von Daten, insbesondere Adaptionsdaten eines Steuergerätes,jeweils abwechselnd in verschiedene Speicherbereiche**
Method for storing data, especially adjustment data for a control device, alternatingly in different storage areas
Procédé de stockage de données, en particulier de données d'adaptation pour un dispositif de contrôle, de façon alternée dans différentes régions de mémoire

(30) Priorität: 26.06.1996 DE 19625619
(43) Veröffentlichungstag der Anmeldung: 07.01.1998
(73) Patentinhaber: SIEMENS AKTIENGESELLSCHAFT, 80333 München (DE)
(72) Erfinder: Loibl, Josef, 94209 Regen (DE)

(56) Entgegenhaltungen:
- DE-A- 4 134 668
- GB-A- 2 250 120
- JP-A- 7 130 080

## Beschreibung

Die Erfindung betrifft ein Verfahren zum Abspeichern von Daten gemäß dem Oberbegriff des Patentanspruchs 1.

Ein Steuergerät benötigt zur Abarbeitung von Steuerprogrammen Daten, insbesondere Steuerdaten, die beispielsweise beim Kraftfahrzeughersteller in einen Lesespeicher (ROM) als Grunddaten eingeschrieben werden. Während der Lebensdauer eines Steuergerätes ändern sich die Betriebsparameter der vom Steuergerät zu steuernden Vorrichtung, insbesondere der Brennkraftmaschine, so daß laufend Daten ermittelt und in einem Speicher als Adaptionsdaten abgelegt werden, auf die dann das Steuergerät anstelle der Grunddaten zugreift. Auf diese Weise wird eine Anpassung der Steuerprogramme an Änderungen der Betriebsparameter der zu steuernden Vorrichtung ermöglicht.

Es ist bereits bekannt, die Adaptionsdaten abwechselnd in verschiedenen Speicherbereichen abzulegen, wobei für jede Abspeicherung in einem vorgegebenen Speicherbereich in einem Sicherungsdatenblock jeweils Sicherungsdaten abgelegt werden, wobei die bei der letzten Abspeicherung abgelegten Sicherungsdaten gelöscht werden. Je öfter die Daten abgespeichert werden, desto größer ist die Wahrscheinlichkeit, daß bei der Abspeicherung im Speicher ein Fehler auftritt.

Aus GB 2 250 120 Al ist ein Verfahren zum Abspeichern von Emulationsprogrammen bekannt, bei dem die Emulationsprogramme in die verschiedenen, jeweils freie Speicherbereiche eingeschrieben werden. Stehen keine freien Speicherbereiche mehr zur Verfügung, so werden die bisher ältesten Emulationsprogramme durch das neue Emulationsprogramm überschrieben.

Die Aufgabe der Erfindung beruht darin, eine fehlerhafte Abspeicherung von Daten, insbesondere von Adaptionsdaten eines Steuergerätes, zu vermeiden.

Die Aufgabe der Erfindung wird durch die Merkmale des Patentanspruchs 1 gelöst. Die Lösung hat den Vorteil, daß die Anzahl der Abspeichervorgänge für einen Speicherbereich reduziert wird und dadurch die Wahrscheinlichkeit für das Auftreten eines Fehlers verringert wird.

Eine weitere vorteilhafte Ausbildung besteht darin, eine Abspeicherung nur vorzunehmen, wenn die Geschwindigkeit des Fahrzeuges unter einer Grenzgeschwindigkeit liegt. Dadurch wird zum einen die Anzahl der Abspeicherungen reduziert und zum anderen wird erricht, daß vorwiegend die Adaptionsdaten in den nicht flüchtigen Speicher eingeschrieben werden, die vor einem Halten und damit mit entsprechender Wahrscheinlichkeit vor einem Abstellen des Kraftfahrzeuges im flüchtigen Speicher vorliegen. Damit stellen diese Adaptionsdaten beim nächsten Starten des Kraftfahrzeuges die aktuellsten Adaptionsdaten dar, die eine optimale Anpassung der Steuerverfahren gewährleisten.

Vorteilhafte Ausgestaltungen der Erfindung sind in den Unteransprüchen gekennzeichnet.

Ein Ausführungsbeispiel der Erfindung ist im folgenden unter Bezugnahme auf die schematischen Zeichnungen näher erläutert.

### Es zeigen:

Figur 1:ein Steuergerät,
Figur 2:schematisch einen Überblick über ein Abspeicherungsverfahren,
Figur 3:einen Datenblock,
Figur 4:einen schematischen Programmablauf zur Abspeicherung von Daten,
Figur 5:einen genaueren schematischen Programmablauf zur Abspeicherung der Daten und
Figur 6:einen schematischen Programmablauf zur Initialisierung eines Steuergerätes.

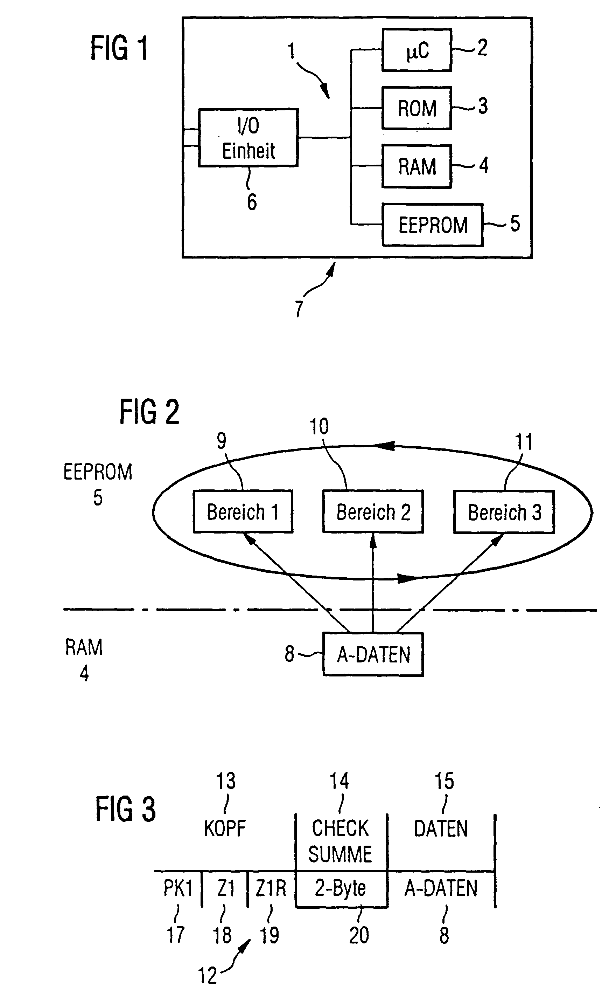

Figur 1 zeigt schematisch ein Steuergerät 7, das eine Ein/Ausgabeeinheit 6 aufweist, die über einen Datenbus 1 mit einer Recheneinheit 2, mit einem ersten Speicher 4, der als Lese-/Schreibspeicher (RAM) ausgebildet ist, mit einem zweiten Speicher 5, der als statischer Lese-/Schreibspeicher, insbesondere in Form eines EEPROM oder als Flash-EPROM ausgebildet ist, und mit einem dritten Speicher 3, der als Lesespeicher (ROM) ausgebildet ist, verbunden ist.

Die Grunddaten sind im dritten Speicher 3 abgelegt und während des Betriebes des Steuergerätes 7 werden über die Ein/Ausgabeeinheit 6 Adaptionsdaten im ersten Speicher 4 zwischengespeichert und in Abhängigkeit von verschiedenen Bedingungen in den nicht flüchtigen zweiten Speicher 5 übertragen, so daß die Adaptionsdaten auch nach einem Abschalten der Spannungsversorgung im zweiten Speicher 5 gespeichert bleiben und nicht verloren gehen, was bei dem ersten Speicher 4 jedoch der Fall wäre. Der Vorteil davon ist, daß das Steuergerät 7 auch nach einem Abschalten und einem erneuten Einschalten der Spannungsversorgung wieder auf die Adaptionsdaten zugreifen kann. Eine Anwendung ist beispielsweise in dem Fall gegeben, wenn das Steuergerät 7 eine Brennkraftmaschine eines Kraftfahrzeuges steuert und die Zündung abgeschaltet und anschließend wieder eingeschaltet wird.

Der erste Speicher 4 ist als flüchtiger Lese-/Schreibspeicher (RAM) und der zweite Speicher 5 als statischer Lese-/Schreibspeicher (EEPROM) ausgebildet, der auch ohne eine Spannungsversorgung die abgelegten Daten speichert. Der erste Speicher 4 verliert bei einem Abschalten der Spannungsversorgung die abgespeicherten Daten.

In dem dritten Speicher 3, der als Lesespeicher (ROM) ausgebildet ist, sind die Grunddaten abgelegt, die das Steuergerät 7 zur Berechnung von Funktionen benötigt, mit denen Vorrichtungen eines Kraftfahrzeuges, insbesondere die Brennkraftmaschine, das Getriebe, die Bremsanlage, die Komfortelektronik und eine elektrische Lenkung ansteuerbar sind. Die Grunddaten werden beim Automobielhersteller im dritten Speicher 3 abgelegt. Bei Inbetriebnaheme des Kraftfahrzeuges greift das Steuergerät 7 zuerst auf die Grunddaten des dritten Speichers 3 zu, um Steuerverfahren für die Vorrichtungen des Kraftfahrzeuges durchführen zu können.

Da sich die Grunddaten jedoch'mit der Lebensdauer des Kraftfahrzeuges ändern können, werden die Grunddaten laufend angepaßt und im ersten Speicher 4 abgelegt. Da jedoch der erste Speicher 4 die Daten nur flüchtig speichert, werden in vorgegebenen Zeitabständen die Adaptionsdaten vom ersten Speicher 4 in den zweiten Speicher 5 überschrieben, der die Adaptionsdaten 8 dauerhaft abspeichert.
In einer bevorzugten Ausführung wird der zweite Speicher 5 als Teilbereich des dritten Speichers 3 ausgebildet und stellt zusammen mit dem dritten Speicher 5 eine bauliche Einheit dar.

Figur 2 zeigt schematisch das Verfahren zum Abspeichern von Daten, die aus dem ersten Speicher 4 in den zweiten Speicher 5 übertragen werden. Dabei werden Adaptionsdaten (A-Daten) 8 abwechselnd in einen ersten Speicherbereich 9, in einen zweiten Speicherbereich 10 oder in einen dritten Speicherbereich 11 des zweiten Speichers 5 eingeschrieben. Der erste, der zweite und der dritte Speicherbereich 9,10,11 stellen physikalisch getrennte Speicherbereiche dar.

Vorteilhafterweise erfolgt die Abspeicherung zyklisch, so daß der Reihe nach die Adaptionsdaten 8 bei einer ersten Abspeicherung in den ersten Speicherbereich 9, bei einer zweiten Abspeicherung in den zweiten Speicherbereich 10, bei einer dritten Abspeicherung in den dritten Speicherbereich 11 und anschließend bei einer vierten Abspeicherung wieder in den ersten Speicherbereich 9 eingeschrieben werden, usw..

Figur 3 zeigt schematisch den Aufbau der abgespeicherten Daten, die in Form eines Datenblockes 12 in einem Speicherbereich 9,10,11 abgespeichert werden. Der Datenblock 12 weist einen Datenkopf 13, eine Checksumme 14 und einen Datenbereich 15 auf. Der Datenkopf 13 umfaßt eine Plausibilitätskennung PK1, 17, einen Zähler Z1,18 und einen redundanten Zähler Z1R,19. Der Zähler 18 ist in Form eines ersten Zählerfeldes 18 ausgebildet, das einen ersten Zahlwert aufweist. Der redundante Zähler 19 ist in Form eines zweiten Zählerfeldes ausgebildet, das einen zweiten Zahlwert aufweist. Die Checksumme 14 hat eine Größe von 2 Bytes und stellt eine Datenfolge 20 dar, die eine Information darüber enthält, ob die im Datenbereich 15 abgelegten Adaptionsdaten 8 fehlerfrei abgelegt wurden.

Die Plausibilitätskennung 17 wird vor dem Einschreiben von Adaptionsdaten 8 aus dem ersten Speicher 4 in den zweiten Speicher 5 auf nicht gültige Daten gesetzt und nach dem Einschreiben der Adaptionsdaten 8 wieder auf gültige Daten gesetzt. Auf diese Weise wird eine Abspeicherung der Adaptionsdaten 8, die vor der korrekten Beendigung und damit vor dem Ändern der Plausibilitätskennung auf gültige Daten unterbrochen wird, über eine Überprüfung der Plausibilitätskennung sofort als ungültige erkannt.

Der Zähler 18 wird nach jedem Abspeichern von Adaptionsdaten 8 um einen Wert erhöht. In einer Weiterbildung der Erfindung wird der Zähler 18 nach dem Abspeichern der Adaptionsdaten 8 um einen Wert höher gesetzt, als der größte Zähler 18 eines anderen Speicherbereiches 9, 10, 11. Auf diese Weise wird erreicht, daß der Speicherbereich 9, 10, 11, in den zuletzt Adaptionsdaten 8 eingeschrieben wurden, den Zähler 18 mit dem höchsten Wert aufweist,so daß der Speicherbereich mit den zuletzt eingeschriebenen Daten über den Zähler 18 gefunden wird. Der redundante Zähler 19 wird ebenfalls wie der Zähler 18 behandelt und dient zu einem Plausibilitätsvergleich mit dem Zähler 18. Weisen der Zähler 18 und der redundante Zähler 19 einen unterschiedlichen Zählerstand auf, so weist dies auf ungültige Daten im Datenblock 12 hin.

In einer Weiterbildung der Erfindung sind der Zähler 18 und der redundante Zähler 19 als überlaufende Zähler ausgebildet. Bei einem Überlauf wird der Überlauf festgehalten und der Zähler 18 als größter Zähler 18 erkannt, der die größte Anzahl der Überläufe und den größten Zählerwert aufweist. Weisen zwei Zähler 18 die gleiche Anzahl der Überläufe auf, so ist der Zähler 18 mit dem größten Zählerwert der größte Zähler. Der redundante Zähler 19 wird analog wie der Zähler 18 behandelt.

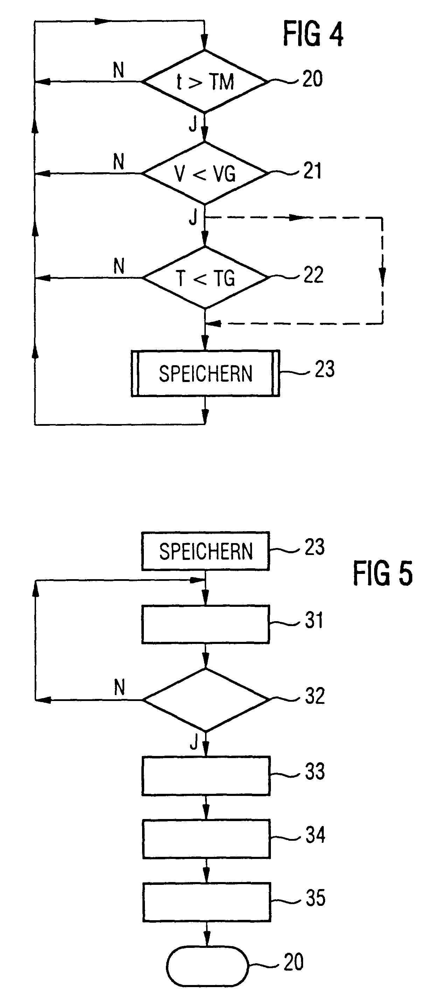

Im folgenden wird anhand von Figur 4 das erfindungsgemäße Verfahren zum Abspeichern von Daten beschrieben. Bei Programmpunkt 20 überprüft die Recheneinheit 2, ob seit dem letzten Abspeichern von Adaptionsdaten 8 aus dem ersten Speicher 4 in den zweiten Speicher 5 eine vorgebbare Zeitdauer TM von vorzugsweise 10 Minuten vergangen ist. Ist dies nicht der Fall, so wird zu Programmpunkt 20 zurückverzweigt.

Ist jedoch seit der letzten Abspeicherung mindestens die Zeitdauer TM vergangen, dann wird bei Programmpunkt 21 überprüft, ob die Geschwindigkeit des Fahrzeuges, in dem sich der zweite Speicher 5 befindet, kleiner als eine vorgegebene Grenzgeschwindigkeit VG ist, die beispielsweise 30 km/h beträgt. Ist die Geschwindigkeit des Kraftfahrzeuges kleiner als die Grenzgeschwindigkeit VG, so wird in einer einfachen Ausführung der Erfindung unter Umgehung des Programmpunktes 22 sofort nach Programmpunkt 23 verzweigt.

Bei einer vorzugsweisen Ausführung der Erfindung wird, wenn die Geschwindigkeit des Kraftfahrzeuges kleiner als die Grenzgeschwindigkeit VG ist, Programmpunkt 22 abgearbeitet. Bei Programmpunkt 22 überprüft die Recheneinheit 2, ob die Temperatur des zweiten Speichers 5 unter einer vorgebbaren Grenztemperatur TG liegt. Die vorgebbare Grenztemperatur liegt beispielsweise bei 120°C. Liegt die Temperatur des zweiten Speichers 5 nicht unter der vorgebbaren Grenztemperatur, so wird nach Programmpunkt 20 zurückverzweigt.

Liegt jedoch die Temperatur des zweiten Speichers 5 unter der Grenztemperatur TG, so wird anschließend Programmpunkt 23 abgearbeitet.

Programmpunkt 23 umfaßt das Übertragen von Adaptionsdaten 8 aus dem ersten Speicher 4 in den zweiten Speicher 5 und ist genauer in Figur 5 dargestellt.

Figur 5 zeigt ausführlich die Programmpunkte, die Programmpunkt 23 umfaßt: Bei Programmpunkt 31 sucht die Recheneinheit 2 den Speicherbereich 9, 10, 11, in dem der Datenblock 12 abgelegt ist, dessen Zähler 18 den niedrigsten Wert aufweist und somit den Datenblock 12 kennzeichnet, der die ältesten Adaptionsdaten 8, d.h. am längsten nicht aktualisierten Adaptionsdaten, aufweist. Dieser Datenblock wird im folgenden als aktueller Datenblock bezeichnet.

Der aktuelle Datenblock wird bei Programmpunkt 32 einer Plausibilitätsüberprüfung unterzogen, indem der Zähler 18 mit dem redundanten Zähler 19 verglichen wird. Ergibt Programmpunkt 32, daß der Zähler 18 und der redundante Zähler 19 nicht übereinstimmen, so wird der aktuelle Datenblock als ungültig gekennzeichnet und es wird nach Programmpunkt 31 zurückverzweigt. Der als ungültig gekennzeichnete Datenblock wird bei Programmpunkt 31 nicht mehr berücksichtigt.

Ergibt die Plausibilitätsüberprüfung bei Programmpunkt 32, daß der Zähler 18 und der redundante Zähler 19 übereinstimmen, so wird bei Programmpunkt 33 die Plausibilitätskennung 17 des aktuellen Datenblockes 12 auf ungültig gesetzt.

Daraufhin speichert die Recheneinheit 2 die Adaptionsdaten 8, die im ersten Speicher 4 abgelegt sind, im aktuellen Datenblock 12 des zweiten Speichers 5 ab. Während des Betriebes des Kraftfahrzeuges werden in den ersten Speicher 4 laufend Adaptionsdaten 8 eingeschrieben. Bei Programmpunkt 33 werden vorzugsweise nur die neuesten Adaptionsdaten 8 vom ersten Speicher 4 in den zweiten Speicher 5 übertragen. Nach der Übertragung der Adaptionsdaten 8 vom ersten Speicher 4 in den zweiten Speicher 5 wird bei Programmpunkt 34 die Plausibilitätskennung 17 des aktuellen Datenblockes 12 wieder auf gültig gesetzt und abschließend bei Programmpunkt 35 der Zähler 18 des aktuellen Datenblockes 12 um einen Wert erhöht.

Vorzugsweise überprüft die Recheneinheit 2 bei Programmpunkt 35 die Zähler 18 aller Datenblöcke 12, die in einem der Speicherbereiche 9, 10, 11 abgelegt sind, und ermittelt den größten Zähler 18. Daraufhin setzt die Recheneinheit 2 dann den Zähler 18 des aktuellen Datenblockes 12 auf einen Wert, der größer ist als der Wert des größten Zählers. Auf diese Weise wird sichergestellt, daß der Datenblock 12, in den zuletzt Adaptionsdaten 8 eingeschrieben wurden, den Zähler 18 mit dem höchsten Wert aufweist. Nach Abarbeitung von Programmpunkt 35 wird nach Programmpunkt 20 zurückverzweigt.

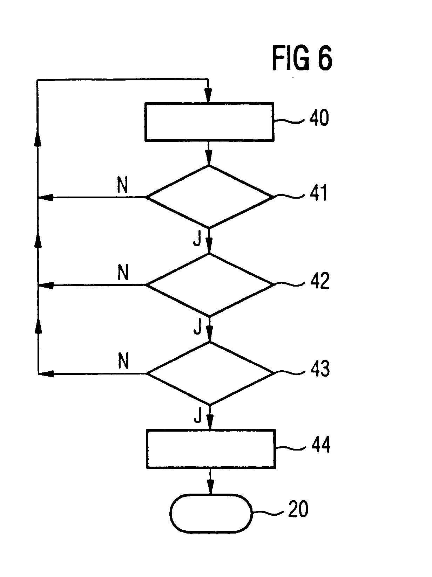

Figur 6 zeigt einen Startvorgang eines Kraftfahrzeuges, bei dem die Recheneinheit 2 eine Initialisierung des Steuergerätes 7 durchführt. Bei Programmpunkt 40 sucht die Recheneinheit 2 den Datenblock 12 des Speicherbereiches 9, 10, 11, dessen Zähler 18 den höchsten Wert aufweist, und der im folgenden als aktueller Datenblock 12 bezeichnet wird. Anschließend überprüft die Recheneinheit 2 bei Programmpunkt 41 die Plausibilitätskennung 17 des aktuellen Datenblockes 12 dahingehend, ob die Plausibilitätskennung 17 auf gültig oder ungültig gesetzt ist. Ist die Plausibilitätskennung 17 auf ungültig gesetzt, so wird dessen Zähler 18 auf null gesetzt und anschließend wird nach Programmpunkt 40 zurückverzweigt.

Durch die Zurücksetzung des Zählers 18 wird gewährleistet, daß dieser Datenblock bei Programmpunkt 40 nicht wieder gefunden wird.

Ergibt die Überprüfung der Plausibilitätskennung 17 des aktuellen Datenblockes 12, daß die Plausibilitätskennung 17 auf gültig gesetzt ist, so wird anschließend bei Programmpunkt 42 der Zähler 18 mit dem redundanten Zähler 19 verglichen. Ergibt der Vergleich, daß der Wert des Zählers 18 vom Wert des redundanten Zählers 19 abweicht, so wird ebenfalls der Zähler 18 des aktuellen Datenblockes 12 auf Null gesetzt und anschließend nach Programmpunkt 40 zurückverzweigt.

Stimmen die Werte des Zählers 18 und des redundanten Zählers 19 überein, so wird anschließend bei Programmpunkt 43 die Checksumme 14 dahingehend überprüft, ob ein Fehler bei den abgespeicherten Adaptionsdaten 8 vorliegt. Liegt ein Fehler bei den Adaptionsdaten 8 vor, so wird der Zähler 18 auf Null zurückgesetzt und anschließend nach Programmpunkt 40 zurückverzweigt. Ergibt die Überprüfung der Checksumme 14, daß die Adaptionsdaten 8 korrekt abgespeichert sind, dann werden beim folgenden Programmpunkt 44 die Adaptionsdaten 8 des aktuellen Datenblockes 12 in den ersten Speicher 4 eingeschrieben und das Steuergerät 7 steuert die Aggregate des Kraftfahrzeuges mit den im ersten Speicher 4 eingeschriebenen Adaptionsdaten 8. Nach Abarbeitung von Programmpunkt 44 wird zu Programmpunkt 20 verzweigt.

Im weiteren Betrieb des Steuergerätes 7 werden laufend Daten, insbesondere Adaptionsdaten 8 von der Recheneinheit 2 in den ersten Speicher 4 eingeschrieben.

Sind nach dem Initialisierungsvorgang die Bedingungen nach den Programmpunkten 20,21 oder 20,21 und 22 der Fig.4 gegeben, dann werden beim ersten Abspeichern nach der Initialisierung die Adaptionsdaten 8 des ersten Speichers 4 in den Speicherbereich 9,10,11 des zweiten Speichers 5 eingeschrieben, dessen Plausibilitätskennung 17 ungültig ist. Ist jedoch kein Speicherbereich 9,10,11 vorhanden, der eine ungültige Plausibilitätskennung 17 aufweist, so werden die Adaptionsdaten des ersten Speicher 4 in den Speicherbereich 9,10,11 des zweiten Speichers 5 eingeschrieben, der die ältesten Adaptionsdaten 8 aufweist, d.h. in den am längsten nicht mehr eingeschrieben wurde.

Ergibt die Überprüfung der Datenblöcke 12 der Speicherbereiche 9, 10, 11 des zweiten Speichers 5, daß im zweiten Speicher 5 keine gültigen Adaptionsdaten 8 abgelegt sind, so werden die Grunddaten aus dem dritten Speicher 3 in den ersten Speicher 2 eingelesen und das Steuergerät 7 steuert die Aggregate des Kraftfahrzeuges mit den Grunddaten. Die Grunddaten stellen zwar in diesem Fall nicht die optimalen Daten dar, sind aber so gut, daß eine Steuerung der Aggregate möglich ist und wieder Adaptionsdaten ermittelt werden können, die dann im ersten und anschließend im zweiten Speicher 5 abgelegt werden. Die vorliegende Erfindung hat den Vorteil, daß die Abspeichervorgänge von Daten, insbesondere Adaptionsdaten, auf einen Speicherbereich 9, 10, 11 eines zweiten Speichers 5 reduziert werden, da nur bei jeder dritten Abspeicherung auf den gleichen Speicherbereich 9, 10, 11 zugegriffen wird. Auf diese Weise wird die physikalische Beanspruchung einzelnen Speicherbereiche 9,10,11 reduziert.

Weiterhin wird die Anzahl der Abspeichervorgänge dadurch reduziert, daß zwischen zwei Abspeichervorgängen eine vorgebbare Zeitdauer vergangen sein muß und die Geschwindigkeit des Kraftfahrzeuges unter einer vorgebbaren Grenzgeschwindigkeit liegen muß. Bei einer Fahrt über die Autobahn beispielsweise, bei der die Geschwindigkeit immer über der Grenzgeschwindigkeit liegt, wird auch über Stunden keine Abspeicherung der Adaptionsdaten erfolgen. Auf diese Weise werden vorwiegend die Adaptionsdaten 8 im nicht flüchtigen zweiten Speicher 5 abgelegt, die mit großer Wahrscheinlichkeit kurz vor dem Halten und Abstellen des Kraftfahrzeuges ermittelt wurden und damit für den nächsten Start die aktuellsten und die geeignetsten Adaptionsdaten 8 darstellen.

Vorzugsweise wird eine Abspeicherung der Adaptionsdaten 8 in den zweiten Speicher 5 nur dann vorgenommen, wenn die Temperatur des zweiten Speichers 5 unter der Grenztemperatur liegt, da die Funktionssicherheit eines Abspeichervorganges auf den zweiten Speichers 5 mit steigender Temperatur abnimmt und bei einer höheren Temperatur, vorzugsweise über 120° C, das Risiko von Fehlern in einzelnen EEPROM-Zellen hinsichtlich eines dauerhaften Defektes steigt.

Das beschriebene Verfahren ist anhand von drei Speicherbereichen 9, 10, 11 beschrieben worden, wobei das Verfahren jedoch auch mit zwei oder mit mehr als drei Speicherbereichen 9, 10, 11 anwendbar ist. Die Grenztemperatur, die Grenzgeschwindigkeit und die vorgebbare Zeitdauer TG sind ebenfalls entsprechend den Einsatzbedingungen vom Fachmann anzupassen.

Eine kostengünstige Ausbildung der Erfindung beruht darin, die Abspeicherung nur auf einem Speicherbereich 9 eines zweiten Speichers 5 mit einem Datenblock 12 vorzunehmen, wobei die physikalische Beanspruchung des einzigen Speicherbereichs dadurch reduziert wird, daß eine Abspeicherung nur dann vorgenommen wird, wenn die vorgebbare Zeitdauer vergangen und die Grenzgeschwindigkeit unterschritten ist, oder wenn die vorgebbare Zeitdauer vergangen und die Grenzgeschwindigkeit unterschritten ist und die Temperatur des Speicherbereiches unter der Grenztemperatur liegt.

## Patentansprüche

1. Verfahren zum Abspeichern von Daten (8), insbesondere Adaptionsdaten, bei dem die Daten (8) aus einem ersten, flüchtigen Speicher (4) ausgelesen und in einem zweiten, nicht flüchtigen Speicher (5) abgespeichert werden,
wobei die Daten (8) abwechselnd, insbesondere in zyklischer Reihenfolge, in einem ersten und in mindestens einem zweiten Speicherbereich (9, 10, 11) des zweiten Speichers (5) abgespeichert werden, **dadurch gekennzeichnet, daß** erst abgespeichert wird, wenn seit dem letzten Abspeichern, eine vorgebbare Zeitdauer vergangen ist.

2. Verfahren nach Anspruch 1, **dadurch gekennzeichnet, daß** zum Abspeichern der Speicherbereich (9, 10, 11) verwendet wird, der am längsten nicht beschrieben wurde und somit die ältesten Daten (8) aufweist.

3. Verfahren nach Anspruch 1, **dadurch gekennzeichnet, daß** bei jeder Abspeicherung für die Daten (8) Sicherungsdaten (17, 18, 19, 14) mit den Daten (8) abwechselnd in dem ersten oder in dem zweiten Speicherbereich (9, 10, 11) des zweiten Speichers (5) abgespeichert werden.

4. Verfahren nach Anspruch 1, **dadurch gekennzeichnet, daß** der Zähler (18) des Speicherbereiches (9), in dem die Daten (8) abgespeichert werden, auf einen Wert erhöht wird, der den höchsten Wert der Zähler (18) der Speicherbereiche (10, 11) darstellt.

5. Verfahren nach Anspruch 1, **dadurch gekennzeichnet, daß** ein Abspeichern nur durchgeführt wird, wenn die Geschwindigkeit, mit der sich der zweite Speicher (5) bewegt, kleiner als eine vorgebbare Grenzgeschwindigkeit ist.

6. Verfahren nach Anspruch 1, **dadurch gekennzeichnet, daß** ein Abspeichern nur erlaubt wird, wenn die Temperatur des zweiten Speichers (5) unter einer vorgebbaren Grenztemperatur liegt.

7. Verfahren nach Anspruch 1, **dadurch gekennzeichnet, daß** zur Initialisierung des Steuergerätes (7) der Speicherbereich (9, 10, 11) des zweiten Speichers (5) gesucht wird, in den als letztes Daten (8) eingeschrieben wurden und bei dem die Überprüfung der Sicherungsdaten (17, 18, 19, 14) eine korrekte Abspeicherung anzeigt, dass die Daten (8) dieses Speicherbereiches (9, 10, 11) in den ersten Speicher (4) eingeschrieben werden, und daß die in den ersten Speicher (4) eingeschriebenen Daten (8) vom Steuergerät (7) zur Abarbeitung eines Steuerverfahrens verwendet werden.

8. Verfahren nach Anspruch 7, **dadurch gekennzeichnet, daß** zum Abspeichern der Speicherbereich (9, 10, 11) verwendet wird, der eine ungültige Plausibilitätskennung (17) aufweist, oder daß, wenn kein Speicherbereich (9, 10, 11) mit ungültiger Plausibilitätskennung (17) vorhanden ist, die Daten (8) in den Speicherbereich (9, 10, 11) gespeichert werden, der am längsten nicht beschrieben wurde und somit die ältesten Adaptionsdaten aufweist.

## Claims

1. Method of storing data (8), in particular adaptation data, in which the data (8) is read from a first volatile memory (4) and is stored in a second nonvolatile memory (5), whereby the data (8) is stored alternately, in particular in a cyclical sequence, in a first and in at least a second memory area (9, 10, 11) of the second memory (5), **characterised in that** no storage operation takes place until a time which can be preset has elapsed since the last storage operation.

2. Method in accordance with Claim 1, **characterised in that** for the storage operation the memory area (9, 10, 11) is used which has not been written to for the longest and thus has the oldest data (8).

3. Method in accordance with Claim 1, **characterised in that** at every storage operation for the data (8), save data (17, 18, 19, 14) is alternately stored with the data (8) in the first or in the second memory area (9, 10, 11) of the second memory (5).

4. Method in accordance with Claim 1, **characterised in that** the counter (18) of the memory area (9) in which the data (8) is stored, is increased to a value which represents the highest value of the counters (18) of the memory areas (10, 11).

5. Method in accordance with Claim 1, **characterised in that** a storage operation takes place only if the speed at which the second memory (5) is moving is less than a limit speed which can be preset.

6. Method in accordance with Claim 1, **characterised in that** a storage operation is permitted only if the temperature of the second memory (5) is below a limit temperature which can be preset.

7. Method in accordance with Claim 1, **characterised in that** when initialising the control unit (7) the memory unit (9, 10, 11) of the second memory (5) is looked for to which data (8) was most recently written and where the check on the save data (17, 18, 19, 14) indicates a correct storage operation, that the data (8) of this memory area (9, 10, 11) is written to the first memory (4), and that the data (8) written to the first memory (4) is used by the control unit (7) to process a control procedure.

8. Method in accordance with Claim 7, **characterised in that** the memory area (9, 10, 11) used for storage is the one which has an invalid plausibility identifier (17), or that, if there is no memory area (9, 10, 11) with an invalid plausibility identifier (17), the data (8) is saved in the memory area (9, 10, 11) which has not been written to for the longest and thus has the oldest adaptation data.

## Revendications

1. Procédé pour la mémorisation de données (8), en particulier de données adaptatives dans lequel les données (8) sont lues dans une première mémoire volatile (4) et mémorisée dans une deuxième mémoire non volatile (5), les données (8) étant mémorisées alternativement, en particulier dans un ordre de succession cyclique, dans une première zone de mémoire et dans au moins une deuxième zone de mémoire (9, 10 ,11) de la deuxième mémoire (5), **caractérisé en ce que** la mémorisation ne s'effectue que s'il s'est écoulé une durée pouvant être prédéterminé depuis la dernière mémorisation.

2. Procédé selon la revendication 1, **caractérisé en ce que**, pour mémoriser, on utilise la zone de mémoire (9, 10, 11) dans laquelle on n'a pas été écrit depuis le plus longtemps et qui possède donc les données (8) les plus anciennes.

3. Procédé selon la revendication 1, **caractérisé en ce qu'**à chaque mémorisation, on mémorise pour les données, (8) des données de sûreté (17, 18, 19, 14) avec les données (8), alternativement dans la première ou dans la deuxième zone de mémoire (9, 10, 11) de la deuxième mémoire (5).

4. Procédé selon la revendication 1, **caractérisé en ce que** le compteur (18) de la zone de mémoire (9) dans laquelle les données (8) sont mémorisées est augmentée sur une valeur qui représente la valeur la plus élevée des compteurs (18) des zones de mémoire (10, 11).

5. Procédé selon la revendication 1, **caractérisé en ce qu'**un enregistrement est exécuté lorsque la vitesse à laquelle la deuxième mémoire (5) se déplace est plus faible qu'une vitesse limite pouvant être prédéterminée.

6. Procédé selon la revendication 1, **caractérisé en ce qu'**une mémorisation n'est autorisée que si la température de la deuxième mémoire (5) est au dessous d'une température limite pouvant être prédéterminée.

7. Procédé selon la revendication 1, **caractérisé en ce que**, pour l'initialisation de l'appareil de commande (7), on cherche la zone de mémoire (9, 10, 11) de la deuxième mémoire (5) dans laquelle des données (8) ont été inscrite en dernier lieu et dans laquelle la vérification des données de sûreté (17, 18, 19, 14) indique une mémorisation correcte, **en ce que** les données (8) de cette zone de mémoire (9, 10, 11) sont inscrites dans la première mémoire (4) et **en ce que** les données (8) inscrites dans la première mémoire (4) sont utilisées par l'appareil de commande (7) pour l'exécution d'une procédure de commande.

8. Procédé selon la revendication 7, **caractérisé en ce que**, pour la mémorisation, on utilise la zone de mémoire (9, 10, 11) qui présente un code de vraisemblance (17) non valide ou **en ce que**, lorsque aucune zone de mémoire (9, 10, 11) possédant un code de vraisemblance (17) non valide n'est présente, les données (8) sont mémorisées dans la zone de mémoire (9, 10, 11) dans laquelle on a pas écrit depuis le plus longtemps et qui présente donc les données adaptatives les plus anciennes.
